# EUROPÄISCHE PATENTANMELDUNG

(11) **EP 1 443 648 A1**
(43) Veröffentlichungstag der Anmeldung: **04.08.2004**
(21) Anmeldenummer: 03405046.8
(22) Anmeldetag: 31.01.2003
(51) Int. Cl.: H03K 17/0814, H02M 7/48

(54) **Umrichterschaltung zur Schaltung von drei Spannungsniveaus**

(71) Anmelder: ABB RESEARCH LTD., 8050 Zürich (CH)
(72) Erfinder: Meysenc, Luc, 5405 Baden-Dättwil (CH); Wieser, Rudolf, 5404 Baden-Dättwil (CH); Rees, Jochen, 79761 Waldshut-Tiengen (DE)
(74) Vertreter: ABB Patent Attorneys

(57) **Zusammenfassung**

Es wird eine Umrichterschaltung zur Schaltung von drei Spannungsniveaus angegeben, die einen durch zwei in Serie geschaltete Kondensatoren gebildeten Gleichspannungskreis (1) aufweist, wobei der Gleichspannungskreis (1) einen ersten Hauptanschluss (2) und einen zweiten Hauptanschluss (3) und einen durch die zwei benachbarten und miteinander verbundenen Kondensatoren gebildeten Teilanschluss (4) umfasst. Weiterhin weist die Umrichterschaltung ein für jede Phase (R, S, T) vorgesehenes Teilumrichtersystem (5) auf, welches jeweils durch eine erste Schaltgruppe (6), durch eine zweite Schaltgruppe (7) und durch eine dritte Schaltgruppe (8) gebildet ist, wobei jede Schaltgruppe (6, 7, 8) durch zwei in Serie geschaltete Leistungshalbleiterschalter (S1, S1, S2, S2, S3, S3) gebildet ist. Jede erste Schaltgruppe (6) ist mit dem ersten Hauptanschluss (2) und mit dem Teilanschluss (4) verbunden, und jede zweite Schaltgruppe (7) ist mit dem zweiten Hauptanschluss (3) und mit dem Teilanschluss (4) verbunden. Darüber hinaus ist die dritte Schaltgruppe (8) eines Teilumrichtersystems (5) mit der ersten Schaltgruppe (6) desselben Teilumrichtersystems (5) und mit der zweiten Schaltgruppe (7) desselben Teilumrichtersystems (5) verbunden.

## Beschreibung

### Technisches Gebiet

Die Erfindung bezieht sich auf das Gebiet der Leistungselektronik. Sie geht aus von einer Umrichterschaltung zur Schaltung von drei Spannungsniveaus gemäss dem Oberbegriff des unabhängigen Anspruchs.

### Stand der Technik

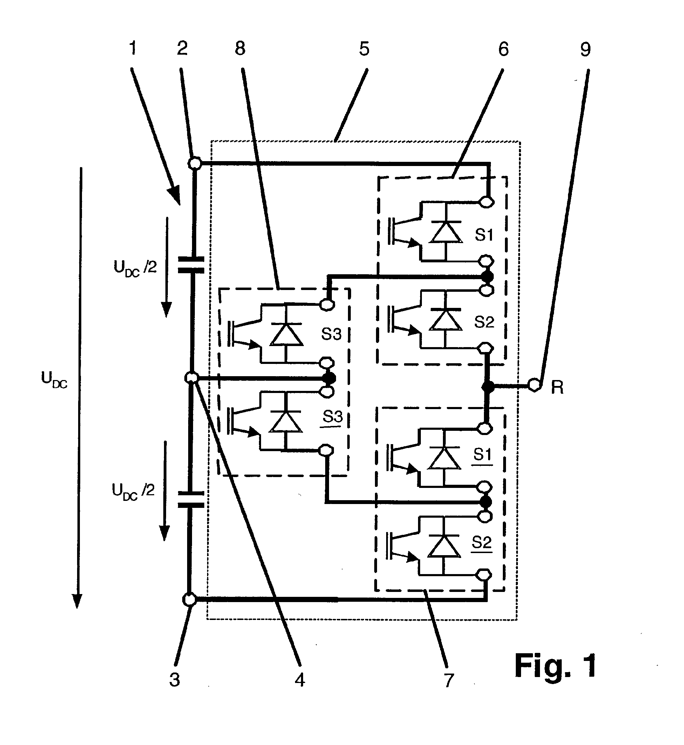

Leistungshalbleiterschalter werden derzeit vermehrt in der Umrichtertechnik und insbesondere in Umrichterschaltungen zur Schaltung von drei Spannungsniveaus eingesetzt. Eine solche Umrichterschaltung zur Schaltung von drei Spannungsniveaus ist in der DE 101 40 747 A1 angegeben. In Fig. 1 ist ein herkömmliches Teilumrichtersystem für eine Phase der Umrichterschaltung gezeigt, wobei das in Fig. 1 gezeigte Teilumrichtersystem einem Teilumrichtersystem der DE 101 40 747 A1 entspricht. Gemäss Fig. 1 ist bei der Umrichterschaltung ein durch zwei in Serie geschaltete Kondensatoren gebildeter Gleichspannungskreis vorgesehen, wobei der Gleichspannungskreis einen ersten Hauptanschluss und einen zweiten Hauptanschluss und einen durch die zwei benachbarten und miteinander verbundenen Kondensatoren gebildeten Teilanschluss aufweist. Der Kapazitätswert der beiden Kondensatoren ist üblicherweise gleich gross gewählt. Zwischen dem ersten Hauptanschluss und dem zweiten Hauptanschluss liegt eine Gleichspannung an, wobei zwischen dem ersten Hauptanschluss und dem Teilanschluss, d.h. am einen Kondensator folglich die halbe Gleichspannung anliegt und zwischen dem Teilanschluss und dem zweiten Hauptanschluss, d.h. am anderen Kondensator folglich ebenfalls die halbe Gleichspannung an. Die Gleichspannung ist gemäss Fig. 1 mit U_{DC} bezeichnet.

Jedes Teilumrichtersystem der Umrichterschaltung gemäss der DE 101 40 747 A1 beziehungsweise nach Fig. 1 ist durch eine erste Schaltgruppe, durch eine zweite Schaltgruppe und durch eine dritte Schaltgruppe gebildet, wobei jede Schaltgruppe durch zwei in Serie geschaltete Leistungshalbleiterschalter gebildet ist. Weiterhin ist die erste Schaltgruppe mit dem ersten Hauptanschluss und die zweite Schaltgruppe mit dem zweiten Hauptanschluss verbunden. Ferner ist die erste Schaltgruppe mit der zweiten Schaltgruppe seriell verbunden, wobei der Verbindungspunkt der ersten Schaltgruppe mit der zweiten Schaltgruppe einen Phasenanschluss bildet. Die dritte Schaltgruppe, welche als Klemmschaltgruppe ausgebildet ist, ist mit der ersten Schaltgruppe, insbesondere mit dem Verbindungspunkt der zwei in Serie geschalteten Leistungshalbleiterschalter der ersten Schaltgruppe, verbunden. Zudem ist die dritte Schaltgruppe mit der zweiten Schaltgruppe, insbesondere mit dem Verbindungspunkt der zwei in Serie geschalteten Leistungshalbleiterschalter der zweiten Schaltgruppe, verbunden. Darüber hinaus ist die dritte Schaltgruppe, insbesondere der Verbindungspunkt der zwei in Serie geschalteten Leistungshalbleiterschalter der dritten Schaltgruppe, mit dem Teilanschluss verbunden.

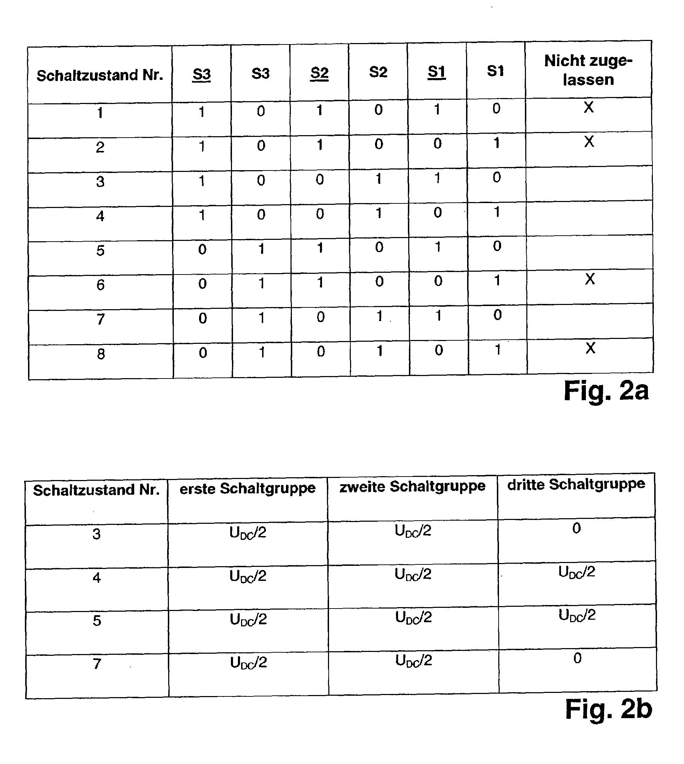

In einer in Fig. 2a gezeigten Tabelle sind die Schaltzustände der Leistungshalbleiterschalter der ersten, zweiten und dritten Schaltgruppe angegeben, wobei die Leistungshalbleiterschalter S1 und S2 die Leistungshalbleiterschalter der ersten Schaltgruppe gemäss Fig. 1 sind, die Leistungshalbleiterschalter S1 und S2 die Leistungshalbleiterschalter der zweiten Schaltgruppe gemäss Fig. 1 sind und die Leistungshalbleiterschalter S3 und S3 die Leistungshalbleiterschalter der dritten Schaltgruppe gemäss Fig. 1 sind. In der ersten Spalte der Tabelle gemäss Fig. 2a ist die Nummer des Schaltzustandes angegeben. In den Spalten zwei bis sieben der Tabelle gemäss Fig. 2a sind die Schaltzustände der entsprechenden Leistungshalbleiterschalter für jede Schaltzustandsnummer angegeben, wobei "1" als "Leistungshalbleiterschalter eingeschaltet" und "0" als Leistungshalbleiterschalter ausgeschaltet" definiert ist. In der letzten Spalte der Tabelle gemäss Fig. 2a sind die nicht zugelassenen Schaltzustände mit "X" gekennzeichnet. Die nachfolgend gezeigte Tabelle umfasst die vier nach der Tabelle gemäss Fig. 2a zugelassenen Schaltzustände für das Teilumrichtersystem nach Fig. 1, wobei die Spannung an jeder der drei Schaltgruppen in den Spalten zwei bis vier zum jeweiligen Schaltzustand eingetragen ist.

| **Schaltzustand Nr.** | **erste Schaltgruppe** | **zweite Schaltgruppe** | **dritte Schaltgruppe** |
|---|---|---|---|
| 3 | U_{DC}/2 | U_{DC}/2 | 0 |
| 4 | 0 | U_{DC} | U_{DC}/2 |
| 5 | U_{DC} | 0 | U_{DC}/2 |
| 7 | U_{DC}/2 | U_{DC}/2 | 0 |

Aus der vorstehend gezeigten Tabelle ist ersichtlich, dass bei zwei Schaltzuständen, nämlich bei Schaltzustand Nummer 4 und bei Schaltzustand Nummer 5, problematischerweise die gesamte Gleichspannung U_{DC} an der zweiten Schaltgruppe beziehungsweise an der ersten Schaltgruppe anliegt. Für diese gesamte Gleichspannung U_{DC} muss die zugehörige Schaltgruppe bezüglich ihrer Isolation ausgelegt sein, wobei die Kosten solcher für eine solche Schaltgruppe mit der Höhe der Spannungsfestigkeit ansteigen. Weiterhin müssen die Schaltgruppen und die Verschienungen der Umrichterschaltung gegeneinander für die vorstehend genannte gesamte Gleichspannung U_{DC} isoliert sein, wodurch zusätzliche Kosten durch aufwendige Isolationsmassnahmen entstehen. Zusätzlich müssen zur Isolation der Schaltgruppen und der Verschienungen der Umrichterschaltung gegen die vorstehend genannte gesamte Gleichspannung U_{DC} Schutzabstände und Kriechstrecken vorgesehen werden, wodurch die Umrichterschaltung einen erheblichen Platzbedarf aufweist.

### Darstellung der Erfindung

Aufgabe der Erfindung ist es deshalb, eine Umrichterschaltung zur Schaltung von drei Spannungsniveaus anzugeben, die möglichst kostengünstig und unkompliziert aufgebaut ist und mit einem geringen Platzbedarf auskommt. Diese Aufgabe wird durch die Merkmale des Anspruchs 1 gelöst. In den abhängigen Ansprüchen sind vorteilhafte Weiterbildungen der Erfindung angegeben.

Die erfindungsgemässe Umrichterschaltung zur Schaltung von drei Spannungsniveaus weist einen durch zwei in Serie geschaltete Kondensatoren gebildeten Gleichspannungskreis auf, wobei der Gleichspannungskreis einen ersten Hauptanschluss und einen zweiten Hauptanschluss und einen durch die zwei benachbarten und miteinander verbundenen Kondensatoren gebildeten Teilanschluss aufweist. Weiterhin ist für jede Phase Teilumrichtersystem vorgesehen, welches jeweils durch eine erste Schaltgruppe, durch eine zweite Schaltgruppe und durch eine dritte Schaltgruppe gebildet ist, wobei jede Schaltgruppe durch zwei in Serie geschaltete Leistungshalbleiterschalter gebildet ist. Erfindungsgemäss ist jede erste Schaltgruppe mit dem ersten Hauptanschluss und mit dem Teilanschluss verbunden. Desweiteren ist jede zweite Schaltgruppe mit dem zweiten Hauptanschluss und mit dem Teilanschluss verbunden. Ferner ist die dritte Schaltgruppe eines Teilumrichtersystems mit der ersten Schaltgruppe desselben Teilumrichtersystems und mit der zweiten Schaltgruppe desselben Teilumrichtersystems verbunden. Durch dieses Verschaltungsmassnahmen der ersten, zweiten und dritten Schaltgruppe wird äusserst vorteilhaft erreicht, dass an jeder der Schaltgruppen, insbesondere an den jeweils zugehörigen Leistungshalbleiterschaltern, für zugelassene Schaltzustände maximal der halbe Wert der über beiden Kondensatoren des Gleichspannungskreises anliegenden Gleichspannung anliegt. Für die erfindungsgemäss Umrichterschaltung können somit Schaltgruppen ausgewählt werden, deren Isolation bezüglich der Spannungsfestigkeit lediglich auf den halben Wert der Gleichspannung des Gleichspannungskreises ausgelegt sein muss, so dass dadurch eine kostengünstige Umrichterschaltung erreicht werden kann. Weiterhin kann aufgrund des halben Wertes der Gleichspannung des Gleichspannungskreises auf aufwendige Isolationsmassnahmen der Schaltgruppen und der Verschienungen der Umrichterschaltung gegeneinander weitestgehend verzichtet werden, so dass sich die Umrichterschaltung dadurch vorteilhaft vereinfacht und weiter Kosten eingespart werden können. Darüber hinaus sind durch die vorstehend erwähnten erfindungsgemässen Verschaltungsmassnahmen der ersten, zweiten und dritten Schaltgruppe eine äusserst platzsparende Realisierung der Umrichterschaltung möglich, da zur Isolation der Schaltgruppen und der Verschienungen der Umrichterschaltung bezüglich des halben Wertes der Gleichspannung des Gleichspannungskreises nur geringe Schutzabstände und kurze Kriechstrecken vorgesehen werden müssen.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine Ausführungsform eines herkömmlichen Teilumrichtersystems einer bekanten Umrichterschaltung,
- Fig. 2a: eine Tabelle mit Schaltzuständen des Teilumrichtersystems gemäss Fig. 1 und eines Teilumrichtersystems gemäss Fig. 3 einer Ausführungsform einer erfindungsgemässen Umrichterschaltung,
- Fig. 2b: eine Tabelle mit zugelassenen Schaltzuständen aus der Tabelle gemäss Fig. 2a und den Schaltzuständen zugeordneten Spannungsverteilungen an dem Teilumrichtersystem gemäss Fig. 3,
- Fig. 3: eine Ausführungsform eines Teilumrichtersystems der erfindungsgemässen Umrichterschaltung und
- Fig. 4: eine mehrphasige, insbesondere dreiphasige Ausführungsform der erfindungsgemässen Umrichterschaltung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

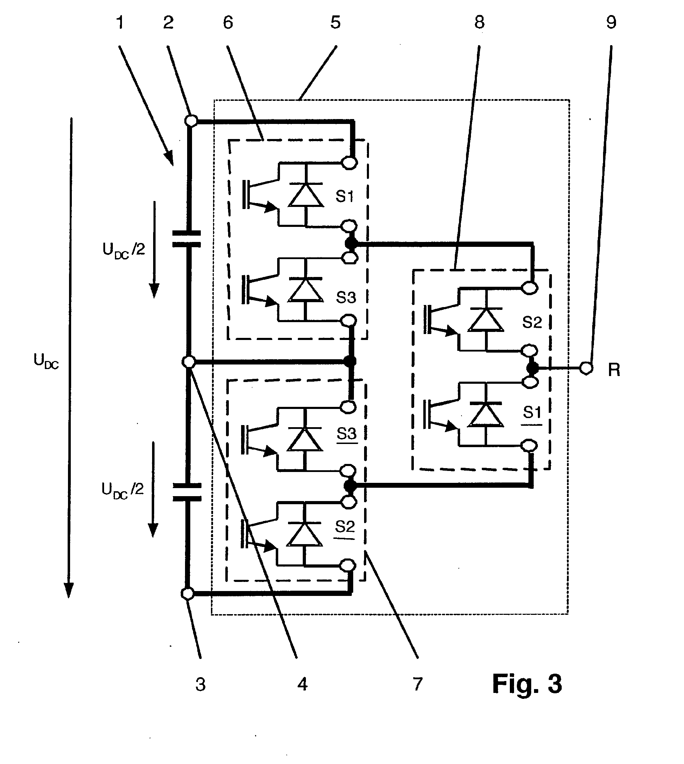

In Fig. 1 ist die bereits eingangs detailliert beschriebene Ausführungsform eines herkömmlichen Teilumrichtersystems 5 einer bekanten Umrichterschaltung zur Schaltung von drei Spannungsniveaus gezeigt. In Fig. 3 ist weiterhin eine Ausführungsform eines Teilumrichtersystems 5 der erfindungsgemässen Umrichterschaltung zur Schaltung von drei Spannungsniveaus dargestellt. Darin weist die erfindungsgemässe Umrichterschaltung einen durch zwei in Serie geschaltete Kondensatoren gebildeten Gleichspannungskreis 1 auf, wobei der Gleichspannungskreis 1 einen ersten Hauptanschluss 2 und einen zweiten Hauptanschluss 3 und einen durch die zwei benachbarten und miteinander verbundenen Kondensatoren gebildeten Teilanschluss 4 aufweist. Ferner weist die erfindungsgemässe Umrichterschaltung gemäss Fig. 3 ein für jede Phase R, S, T vorgesehenes Teilumrichtersystem 5 auf, welches jeweils durch eine erste Schaltgruppe 6, durch eine zweite Schaltgruppe 7 und durch eine dritte Schaltgruppe 8 gebildet ist. Jede Schaltgruppe 6, 7, 8 ist durch zwei in Serie geschaltete Leistungshalbleiterschalter S1, S1, S2, S2, S3, S3 gebildet. Erfindungsgemäss ist jede erste Schaltgruppe 6 mit dem ersten Hauptanschluss 2 und mit dem Teilanschluss 4 verbunden. Zudem ist jede zweite Schaltgruppe 7 mit dem zweiten Hauptanschluss 3 und mit dem Teilanschluss 4 verbunden, d.h. die erste und zweite Schaltgruppe 6, 7 sind gemäss Fig. 3 seriell miteinander verbunden, wobei der Verbindungspunkt der ersten Schaltgruppe 6 mit der zweiten Schaltgruppe 7 mit dem Teilanschluss 4 verbunden ist. Gemäss Fig. 3 ist die dritte Schaltgruppe 8 eines Teilumrichtersystems 5 mit der ersten Schaltgruppe 6 desselben Teilumrichtersystems 5 und mit der zweiten Schaltgruppe 7 desselben Teilumrichtersystems 5 verbunden. In Fig. 2a ist die bereits eingangs erwähnte Tabelle mit Schaltzuständen des Teilumrichtersystems 5 gemäss Fig. 1 gezeigt, wobei die Tabelle gemäss Fig. 2a auch für das Teilumrichtersystem 5 gemäss Fig. 3 der Ausführungsform der erfindungsgemässen Umrichterschaltung mit der Terminologie der Leistungshalbleiterschalter S1, S1, S2, S2, S3, S3 der einzelnen Schaltgruppen 6, 7,8 gilt. In der in Fig. 2b dargestellten Tabelle sind die zugelassenen Schaltzustände aus der Tabelle gemäss Fig. 2a und den Schaltzuständen zugeordnete Spannungsverteilungen am Teilumrichtersystem 5 gemäss Fig. 3 gezeigt. Aus der Tabelle 2b ist demnach ersichtlich, dass durch die erfindungsgemässen und vorstehend detailliert erläuterten Verschaltungsmassnahmen der ersten, zweiten und dritten Schaltgruppe 6, 7, 8 vorteilhaft an jeder der Schaltgruppe 6, 7, 8, insbesondere an den jeweils zugehörigen Leistungshalbleiterschaltern S1, S1, S2, S2, S3, S3, maximal der halbe Wert U_{DC}/2 der über beiden Kondensatoren des Gleichspannungskreises 1 anliegenden Gleichspannung U_{DC} anliegt. Vorteilhaft können Schaltgruppen 6, 7, 8 mit Leistungshalbleiterschalter S1, S1, S2, S2, S3, S3 verwendet werden, deren Isolation bezüglich Spannungsfestigkeit lediglich auf den halben Wert U_{DC}/2 der Gleichspannung U_{DC} des Gleichspannungskreises 1 ausgelegt sein muss. Solche Schaltgruppen 6, 7, 8 welche üblicherweise als Module erhältlich sind, sind erfahrungsgemäss günstig, so dass dadurch eine kostengünstige Umrichterschaltung realisierbar ist. Darüber hinaus kann auf aufwendige Isolationsmassnahmen der Schaltgruppen 6, 7, 8 und der Verschienungen der Umrichterschaltung gegeneinander weitestgehend verzichtet werden, wodurch sich die erfindungsgemässe Umrichterschaltung vereinfachen lässt und weitere Kosten eingespart werden können. Ferner ist durch die vorstehend erwähnten erfindungsgemässen Verschaltungsmassnahmen der ersten, zweiten und dritten Schaltgruppe 6 ,7 ,8 eine sehr platzsparende Realisierung der Umrichterschaltung möglich, da zur Isolation der Schaltgruppen 6, 7, 8 und der Verschienungen der Umrichterschaltung bezüglich des halben Wertes U_{DC}/2 der Gleichspannung U_{DC} des Gleichspannungskreises 1 nur geringe Schutzabstände und kurze Kriechstrecken, insbesondere für gängigerweise verwendete Verschienungsisolatoren zur Isolation der Verschienungen gegeneinander, vorgesehen werden müssen.

Vorzugsweise bildet der Verbindungspunkt der beiden Leistungshalbleiterschalter S1, S3 der dritten Schaltgruppe 8 eines jeden Teilumrichtersystems 5 gemäss Fig. 3 einen Phasenanschluss 9. Zudem ist die dritte Schaltgruppe 8 eines Teilumrichtersystems 5 gemäss Fig. 3 mit der ersten Schaltgruppe 6 desselben Teilumrichtersystems 5 am Verbindungspunkt der beiden Leistungshalbleiterschalter S1, S3 der ersten Schaltgruppe 6 verbunden. Desweiteren und ist die dritte Schaltgruppe 8 eines Teilumrichtersystems 5 mit der zweiten Schaltgruppe 7 desselben Teilumrichtersystems 5 am Verbindungspunkt der beiden Leistungshalbleiterschalter S2, S3 der zweiten Schaltgruppe 7 verbunden.

Es hat sich ferner als vorteilhaft erwiesen, dass bei der erfindungsgemässen Umrichterschaltung gemäss Fig. 3 die Leistungshalbleiterschalter S1, S1, S2, S2, S3, S3 der Schaltgruppen 6, 7, 8 als ansteuerbare bidirektionale Leistungshalbleiterschalter ausgebildet sind. Jeder dieser derart ausgeführten Leistungshalbleiterschalter S1, S1, S2, S2, S3 ist demnach mit einer in Fig. 3 der Übersichtlichkeit wegen nicht dargestellten Ansteuereinrichtung verbunden, welche zur Ansteuerung des jeweiligen Leistungshalbleiterschalters S1, S1, S2, S2, S3, S3 notwendige Ansteuersignale erzeugt und an die einzelnen Leistungshalbleiterschalter S1, S1, S2, S2, S3, S3 überträgt. Die Ansteuersignale müssen dabei so geartet sein, dass für jeden zugelassen Schaltzustand nach der Tabelle gemäss Fig. 2a die jeweiligen Leistungshalbleiterschalter S1, S1, S2, S2, S3, S3, eingeschaltet, in der Tabelle gemäss Fig. 2a bezeichnet mit "1", oder ausgeschaltet, in der Tabelle gemäss Fig. 2a bezeichnet mit "0", sind. Vorzugsweise ist ein vorstehend genannter ansteuerbarer bidirektionaler Leistungshalbleiterschalter als Bipolartransistor mit isoliert angeordneter Ansteuerelektrode mit zusätzlich antiparallel geschalteter Diode ausgeführt, wobei solche Bipolartransistoren vorteilhaft mit einer hohen Schaltfrequenz betrieben werden können und damit die Oberschwingungen sowohl auf der Gleichspannungskreisseite der Umrichterschaltung als auch auf der Phasenseite der Umrichterschaltung in erwünschtem Masse gering gehalten werden können. Es ist aber auch denkbar einen vorstehend genannten ansteuerbaren bidirektionalen Leistungshalbleiterschalter beispielsweise als Abschaltthyristor, wie beispielweise GTO oder IGCT mit entsprechender Beschaltung, oder als Leistungs-MOSFET mit zusätzlich antiparallel geschalteter Diode auszuführen. Jeder dieser ansteuerbaren bidirektionalen Leistungshalbleiterschalter ist aus mindestens einem, vorzugsweise aber aus mehrere in Serie geschalteten und im wesentlichen synchron angesteuerten Leistungshalbleiterchips aufgebaut, so dass sich die Spannung innerhalb ansteuerbaren bidirektionalen Leistungshalbleiterschalter entsprechend der Anzahl der Leistungshalbleiterchips vorteilhaft aufteilen kann. Mit den als ansteuerbare bidirektionale Leistungshalbleiterschalter ausgeführten Leistungshalbleiterschaltern S1, S1, S2, S2, S3, S3 der ersten, zweiten und dritten Schaltgruppe 6 ,7, 8 ist die Umrichterschaltung sowohl als aktiver Gleichrichter als auch als aktiver Wechselrichter betreibbar.

Alternativ zu den in Fig. 3 als ansteuerbare bidirektionale Leistungshalbleiterschalter ausgeführten Leistungshalbleiterschaltern S3 und S3 der ersten Schaltgruppe 6 beziehungsweise der zweiten Schaltgruppe 7 ist es auch denkbar, dass der Leistungshalbleiterschalter S3 der ersten Schaltgruppe 6 und der Leistungshalbleiterschalter S3 der zweiten Schaltgruppe 9 jeweils als unidirektionale Leistungshalbleiterschalter ausgebildet sind. Dadurch lässt sich vorteilhaft der Verkabelungsaufwand der erfindungsgemässen Umrichterschaltung reduzieren, da für eine solche Ausführungsform keine Ansteuersignale an die Leistungshalbleiterschalter S3 und S3 der ersten Schaltgruppe 6 beziehungsweise der zweiten Schaltgruppe 7 übertragen werden müssen. Vorzugsweise ist ein vorstehend genannter unidirektionaler Leistungshalbleiterschalter als Leistungsdiode ausgebildet. Mit den als ansteuerbare bidirektionale Leistungshalbleiterschalter ausgeführten Leistungshalbleiterschaltern S1, S1, S2, S2 der ersten, zweiten und dritten Schaltgruppe 6 ,7, 8 und den als unidirektionale Leistungshalbleiterschalter ausgebildeten Leistungshalbleiterschaltern S3 und S3 der ersten Schaltgruppe 6 beziehungsweise der zweiten Schaltgruppe 7 ist die Umrichterschaltung sowohl als aktiver Gleichrichter als auch als aktiver Wechselrichter betreibbar.

Weiterhin ist es alternativ zu den in Fig. 3 als ansteuerbare bidirektionale Leistungshalbleiterschalter ausgeführten Leistungshalbleiterschaltern S1, S1, S2, S2, S3, S3 auch denkbar, dass die Leistungshalbleiterschalter S1, S1, S2, S2, S3, S3 der Schaltgruppen 6, 7, 8 als unidirektionale Leistungshalbleiterschalter ausgebildet sind, so dass eine weitere Reduktion des vorteilhaft der Verkabelungsaufwand bewirkt werden kann. Mit den vorstehend als unidirektionale Leistungshalbleiterschalter ausgeführten Leistungshalbleiterschaltern S1, S1, S2, S2, S3, S3 der ersten, zweiten und dritten Schaltgruppe 6 ,7, 8 ist die Umrichterschaltung sowohl als passiver betreibbar.

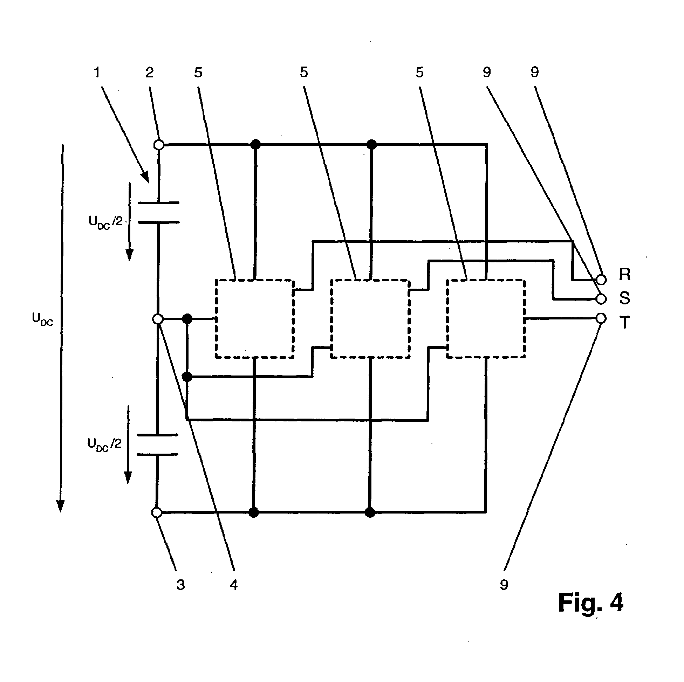

In Fig. 4 ist beispielhaft eine mehrphasige, insbesondere dreiphasige Ausführungsform der erfindungsgemässen Umrichterschaltung dargestellt, wobei für jede Phase R, S, T ein vorstehend gemäss Fig. 3 beschriebenes Teilumrichtersystem 5 verwendet ist.

### Bezugszeichenliste

- 1: Gleichspannungskreis
- 2: erster Hauptanschluss
- 3: zweiter Hauptanschluss
- 4: Teilanschluss
- 5: Teilumrichtersystem
- 6: erste Schaltgruppe
- 7: zweite Schaltgruppe
- 8: dritte Schaltgruppe
- 9: Phasenanschluss
- S1, S1, S2, S2, S3, S3: Leistungshalbleiterschalter

## Patentansprüche

1. Umrichterschaltung zur Schaltung von drei Spannungsniveaus, mit einem durch zwei in Serie geschaltete Kondensatoren gebildeten Gleichspannungskreis (1), wobei der Gleichspannungskreis (1) einen ersten Hauptanschluss (2) und einen zweiten Hauptanschluss (3) und einen durch die zwei benachbarten und miteinander verbundenen Kondensatoren gebildeten Teilanschluss (4) aufweist, und mit einem für jede Phase (R, S, T) vorgesehenen Teilumrichtersystem (5), welches jeweils durch eine erste Schaltgruppe (6), durch eine zweite Schaltgruppe (7) und durch eine dritte Schaltgruppe (8) gebildet ist, wobei jede Schaltgruppe (6, 7, 8) durch zwei in Serie geschaltete Leistungshalbleiterschalter (S1, S1, S2, S2, S3, S3) gebildet ist, **dadurch gekennzeichnet,**
**dass** jede erste Schaltgruppe (6) mit dem ersten Hauptanschluss (2) und mit dem Teilanschluss (4) verbunden ist,
**dass** jede zweite Schaltgruppe (7) mit dem zweiten Hauptanschluss (3) und mit dem Teilanschluss (4) verbunden ist, und
**dass** die dritte Schaltgruppe (8) eines Teilumrichtersystems (5) mit der ersten Schaltgruppe (6) desselben Teilumrichtersystems (5) und mit der zweiten Schaltgruppe (7) desselben Teilumrichtersystems (5) verbunden ist.

2. Umrichterschaltung nach Anspruch 1, **dadurch gekennzeichnet, dass** der Verbindungspunkt der beiden Leistungshalbleiterschalter (S1, S3) der dritten Schaltgruppe (8) einen Phasenanschluss (9) bildet.

3. Umrichterschaltung nach Anspruch 1 oder 2, **dadurch gekennzeichnet, dass** die dritte Schaltgruppe (8) eines Teilumrichtersystems (5) mit der ersten Schaltgruppe (6) desselben Teilumrichtersystems (5) am Verbindungspunkt der beiden Leistungshalbleiterschalter (S1, S3) der ersten Schaltgruppe (6) verbunden ist, und
dass die dritte Schaltgruppe (8) eines Teilumrichtersystems (5) mit der zweiten Schaltgruppe (7) desselben Teilumrichtersystems (5) am Verbindungspunkt der beiden Leistungshalbleiterschalter (S2, S3) der zweiten Schaltgruppe (7) verbunden ist.

4. Umrichterschaltung nach einem der Ansprüche 1 bis 3, **dadurch gekennzeichnet, dass** die Leistungshalbleiterschalter (S1, S1, S2, S2, S3, S3) der Schaltgruppen (6, 7, 8) als ansteuerbare bidirektionale Leistungshalbleiterschalter ausgebildet sind.

5. Umrichterschaltung nach einem der Ansprüche 1 bis 3, **dadurch gekennzeichnet, dass** ein Leistungshalbleiterschalter (S1) der ersten Schaltgruppe (6) als ansteuerbarer bidirektionaler Leitungshalbleiterschalter und ein andere Leistungshalbleiterschalter (S3) der ersten Schaltgruppe (6) als unidirektionaler Leitungshalbleiterschalter ausgebildet ist, dass ein Leistungshalbleiterschalter (S2) der zweiten Schaltgruppe (7) als ansteuerbarer bidirektionaler Leitungshalbleiterschalter und ein andere Leistungshalbleiterschalter (S3) der zweiten Schaltgruppe (7) als unidirektionaler Leitungshalbleiterschalter ausgebildet ist, und
dass die Leistungshalbleiterschalter (S1, S2) der dritten Schaltgruppe (8) als ansteuerbare bidirektionale Leistungshalbleiterschalter ausgebildet sind.

6. Umrichterschaltung nach einem der Ansprüche 1 bis 3, **dadurch gekennzeichnet, dass** die Leistungshalbleiterschalter (S1, S1, S2, S2, S3, S3) der Schaltgruppen (6, 7, 8) als unidirektionale Leistungshalbleiterschalter ausgebildet sind.
